# EUROPÄISCHE PATENTANMELDUNG

(11) **EP 0 568 854 A2**
(43) Veröffentlichungstag der Anmeldung: **10.11.1993**
(21) Anmeldenummer: 93106351.5
(22) Anmeldetag: 20.04.1993
(51) Int. Cl.: A01B 59/043

(54) **Verfahren und Schnellkupplung zum mechanischen Verbinden eines Schleppers mit einer landwirtschaftlichen Arbeitsmaschine**

(30) Priorität: 21.04.1992 DE 4213069
(71) Anmelder: Friedrich Mörtl Schleppergerätebau GmbH & Co. KG, D-97737 Gemünden (DE)
(72) Erfinder: Grenzebach, Hans, W-8780 Gemünden/Main (DE)
(74) Vertreter: Rehberg, Elmar, Dipl.-Ing.

(57) **Zusammenfassung**

Ein Verfahren zum mechanischen Verbinden eines Schleppers (1) mit einer landwirtschaftlichen Arbeitsmaschine (17) und zum Kuppeln eines vom Schlepper zur Arbeitsmaschine führenden Antriebsstrangs, mit einem mit den Lenkern einer Schlepperhydraulik verbundenen Kupplungsrahmen (3), einem mit der Arbeitsmaschine (17) verbundenen Anschlußrahmen (18) und einer Verriegelungseinrichtung für den Anschlußrahmen am Kupplungsrahmen, sowie mit einem in einem ersten Verbindungselement (8) endenden schlepperseitigen Teilantriebsstrang (6) und einem in einem zweiten Verbindungselement (23) endenden arbeitsmaschinenseitigen Teilantriebstrangs (20), sieht vor, daß zunächst allein das mechanische Verbinden des Anschlußrahmens (18) an dem Kupplungsrahmen (3) erfolgt und anschließend die beiden Verbindungselemente (8, 23) etwa senkrecht zu der von dem Kupplungsrahmen (3) aufgespannten Kuppelebene (5) einander angenähert werden, und dabei eine Zentrierung der Achsen (24 und 25) der beiden Verbindungselemente (8 und 23) und sodann eine relative Winkelverdrehung der beiden Verbindungselemente (8 und 23) durchgeführt werden. Nach dem mechanischen Verbinden des Anschußrahmens (18) an dem Kupplungsrahmen (3) wird die Lage des ersten Verbindungselementes (8) des schlepperseitigen Teilantriebsstrangs (6) entsprechend der jeweiligen Lage des zweiten Verbindungselementes (23) des arbeitsmaschinenseitigen Teilantriebsstrangs (20) eingestellt, und erst anschließend werden die beide Verbindungselemente unter Achszentrierung und Winkelverdrehung einander axial angenähert und damit gekuppelt.

## Beschreibung

Die Erfindung bezieht sich auf ein Verfahren und eine Vorrichtung mit den in den Oberbegriffen der Ansprüche 1 und 3 niedergelegten Merkmalen.

Die DE-OS 41 32 889 zeigt ein solches Verfahren und eine solche Schnellkupplung. Das schlepperseitige Verbindungselement ist etwa in der durch den Kupplungsrahmen aufgespannten Kuppelebene angeordnet, wobei es von einem Gestell getragen ist, das mit dem Kupplungsrahmen fest verbunden ist. Das schlepperseitige Verbindungselement ist in dem Gestell mit dem für die Verbindung mit dem antriebsmaschinenseitigen Verbindungselement erforderlichen Spiel gegen Federdruck nachgiebig gelagert. In axialer Richtung, also senkrecht zu der von dem Kupplungsrahmen aufgespannten Kuppelebene ist das Verbindungselement am Kupplungsrahmen begrenzt axial beweglich angeordnet, wobei es in axialer Richtung hydraulisch gegen eine Rückführfeder um den beim Kuppeln der Verbindungselemente erforderlichen Weg verschiebbar ist. Die axiale und radiale Lage des schlepperseitigen Verbindungselementes relativ zu der von dem Kupplungsrahmen aufgespannten Kuppelebene kann nicht verändert werden. Auch der arbeitsmaschinenseitig vorgesehene Anschlußrahmen weist ein gesondertes, fest mit ihm verbundenes Gestell auf, an welchem Führungszapfen für die Achszentrierung der beiden Gestelle und damit der beiden Verbindungselemente zueinander vorgesehen sind. Damit ist es nicht möglich, vorhandene Anschlußrahmen für die Schnellkupplung zu nutzen; es ist vielmehr erforderlich, jeden Anschlußrahmen der betreffenden landwirtschaftlichen Arbeitsmaschine mit einem Zugeordneten Gestell auszustatten.

Auch der Anschlußrahmen spannt arbeitsmaschinenseitig eine Kuppelebene auf, wobei das schlepperseitig vorgesehene Verbindungselement bei Heckanbau vor der durch den Anschlußrahmen bestimmten Kuppelebene endet. An den beiden Gestellen können jedoch vorteilhaft weitere Verbindungselemente für elektrische oder pneumatische Leitungen vorgesehen sein, die gleichzeitig mit den beiden Teilantriebssträngen gekuppelt werden können. Der wesentliche Nachteil dieser bekannten Schnellkupplung liegt jedoch darin, daß nur solche landwirtschaftlichen Arbeitsmaschinen gekuppelt werden können, die einerseits mit einem Anschlußrahmen mit zugehörigem Gestell versehen sind und bei denen sich das arbeitsmaschinenseitige Verbindungselement axial und radial an übereinstimmender Stelle relativ zu dem schlepperseitigen Verbindungselement befindet. Diese fixe Lage der Verbindungselemente zueinander bringt es mit sich, daß die bekannte Schnellkupplung nur auf eine begrenzte Anzahl von landwirtschaftlichen Maschinen überhaupt anwendbar ist, nämlich auf solche, die dieser Bedingung genügen. Oft ist es aber bei landwirtschaftlichen Arbeitsmaschinen, insbesondere Anbaugeräten, gar nicht möglich, eine übereinstimmende Lage der Achse des arbeitsmaschinenseitigen Verbindungselementes zu verwirklichen, weil die dafür vorgesehene Stelle durch andere konstruktive Elemente der landwirtschaftlichen Arbeitsmaschine bereits besetzt ist. Weiterhin liegt auch die beschriebene Lage in axialer Richtung fest, weil die axiale Verschiebbarkeit des schlepperseitigen Verbindungselementes auf den Hub beim Ineinandergreifen der beiden Verbindungselemente beschränkt ist. Die gemeinsame Kuppelebene der Verbindungselemente in gekuppeltem Zustand befindet sich etwa zwischen der durch den Kupplungsrahmen aufgespannten Kuppelebene und der durch den Anschlußrahmen aufgespannten Kuppelebene, also nur geringfügig hinter (bei Heckanbau) der durch den Kupplungsrahmen festgelegten Kuppelebene, so daß beim Anheben und beim Arbeiten mit dem landwirtschaftlichen Arbeitsgerät relativ große Beugewinkel in den Kreuzgelenken des schlepperseitigen Antriebsstranges entstehen. Dies erfordert eine größere Dimensionierung des schlepperseitigen Teilantriebsstrangs. Bei ungünstigen Anbauverhältnissen kann dies dazu führen, daß sich der Antriebsstrang nicht mehr realisieren läßt, so daß die bekannte Schnellkupplung für diesen besonderen Einsatzfall nicht anwendbar ist.

Eine weitere Schnellkupplung ist aus der AT-PS 379 048 bekannt. Es ist ein gleichseitig ausgebildeter, dreieckförmiger Kupplungsrahmen vorgesehen, der mit den beiden Unterlenkern und einem längenveränderlichen Oberlenker am Schlepper gekoppelt ist. Der Kupplungsrahmen weist einen ihn quer durchsetzenden Steg auf, der ein Lager für ein erstes, auf dem Kupplungsrahmen angeordnetes Verbindungselement trägt. Das Lager ist somit in der von dem Kupplungsrahmen aufgespannten Kuppelebene angeordnet. Das Verbindungselement besteht aus einem Achsstummel mit einem Keilwellenprofil, der auf der dem Schlepper zugekehrten Seite an eine Gelenkwelle angeschlossen ist, die zwei längsverschiebliche Teile besitzt, um das bei Betätigung der Schlepperhydraulik erforderliche Spiel auszugleichen bzw. die Änderungen des Abstands des Lagers am Kupplungsrahmen zu der Schlepperhydraulik auszugleichen. Dem Kupplungsrahmen ist ein Anschlußrahmen zugeordnet, der fest mit der landwirtschaftlichen Arbeitsmaschine verbunden ist. Auch dieser Anschlußrahmen ist in Form eines gleichseitigen Dreiecks ausgebildet und besitzt einen Steg, der ein festes Lager für eine Kupplungsmuffe aufnimmt. Der Steg am Anschlußrahmen kann geringfügig aus der Kuppelebene heraus nach hinten versetzt angeordnet sein. Die Kupplungsmuffe kann zudem auf einer Feder begrenzt beweglich abgestützt sein. Der Kupplungsrahmen weist an der Spitze seines Dreiecks einen Zapfen auf, der in eine Ausnehmung am Anschlußrahmen eingreift. Der Kupplungsrahmen ist als geschlossenes Hohlprofil ausgebildet, während der Anschlußrahmen in Richtung auf den Kupplungsrahmen vorstehende Schenkel aufweist. Demzufolge ist eine Verriegelungseinrichtung zwischen Kupplungsrahmen und Anschlußrahmen erforderlich, die zwei Kolben/Zylinder-Einheiten aufweist, deren Kolbenstangen Verriegelungsfortsätze an den beiden Rahmen in der verriegelten Stellung durchsetzen. Die bekannte Schnellkupplung ist so ausgebildet, daß ein gleichzeitiger Anschluß zwischen der landwirtschaftlichen Arbeitsmaschine und dem Schlepper herbeigeführt wird, wobei die mechanische Verbindung zwischen den beiden Rahmen und das Kuppeln des Antriebsstrangs gleichzeitig erfolgen. Aus diesem Grund ist es daher zunächst erforderlich, den Zapfen am Kupplungsrahmen in die Ausnehmung am Anschlußrahmen eingreifen zu lassen, wobei die von den beiden Rahmen aufgespannten Flächen noch in einem Winkel zueinander stehen. Der Kupplungsrahmen muß dann eine Art Klappbewegung um eine horizontale, durch den Zapfen gehende Achse ausführen, damit sich einerseits der Anschlußrahmen mit seinen Fortsätzen auf den Kupplungsrahmen legt und andererseits das mit dem Keilwellenprofil versehene Verbindungselement in die mit einem Keilwellenhohlprofil versehene Kupplungsmuffe eintritt.

Die bekannte Schnellkupplung ist dann noch gemäß AT-PS 382 063 weitergebildet worden, indem der das Lager für das erste Verbindungselement tragende Steg am Kupplungsrahmen geringfügig in Richtung auf den Anschlußrahmen versetzt worden ist. Der Zapfen am Kupplungsrahmen wurde durch eine Rolle ersetzt und die beiden Verbindungselemente sind als Klauenkupplung oder Rutschkupplung ausgebildet worden. An dem das feste Lager für das erste Verbindungselement tragenden Steg des Kupplungsrahmens wurden auch Steckkupplungen für die Hydraulik-, Pneumatik- und Elektroanschlüsse vorgesehen.

Die bekannte Schnellkupplung weist eine Reihe gravierender Nachteile auf. Durch das gleichzeitige mechanische Verbinden des Kupplungsrahmens mit dem Anschlußrahmen und das Kuppeln der Verbindungselemente können sich die Verbindungselemente - in ihrer Achsrichtung gesehen, also etwa in Fahrt- bzw. Arbeitsrichtung - nur auf vergleichsweise kurzer Kuppellänge überdecken, was für die Übertragung des Drehmoments im Antriebsstrang nicht optimal ist. Beim mechanischen Verbinden und Kuppeln eines Schleppers mit unterschiedlichen landwirtschaftlichen Arbeitsmaschinen muß das Verbindungselement an dem Anschlußrahmen der landwirtschaftlichen Maschine immer am gleichen Ort angeordnet sein, d. h. sämtliche landwirtschaftlichen Arbeitsmaschinen müssen mit dem bekannten, speziellen Anschlußrahmen ausgerüstet werden und erfordern jeweils einen speziellen Umbau. Es ist nicht möglich, im Stand der Technik bekannte Kuppelrahmen mit U-förmig übereinandergreifenden Querschnitten zu benutzen. Weiterhin ist nachteilig, daß die beiden Verbindungselemente am Kupplungsrahmen einerseits und am Anschlußrahmen andererseits beide etwa in der jeweiligen, von den jeweiligen Rahmen aufgespannten Kuppelebene liegen müssen. Nur ein geringfügiges Herausrücken der Verbindungselemente aus diesen Ebenen nach hinten ist möglich. Hierdurch wird jedoch die Bewegungsgeometrie im Bereich der Unterlenker und des Oberlenkers der Schlepperhydraulik nur bedingt verbessert. Es stellen sich große Schräglagen einer vergleichsweise kurz ausgebildeten Gelenkwelle beim Anheben über die Schlepperhydraulik ein, was für einen gleichförmigen Antrieb ungünstig ist. Wenn sich die Teile der Gelenkwelle nur geringfügig überlagern, kann es beim Anheben vorkommen, daß die beiden Teile der schlepperseitigen Gelenkwelle außer Eingriff zueinander gelangen. Weiterhin erfordert die bekannte Schnellkupplung eine Querschnittsgestaltung des Kupplungsrahmens und des Anschlußrahmens, die an den einander zugekehrten Seiten offen ausgebildet sein müssen. Hierdurch wird eine spezielle Verriegelungseinrichtung zwischen dem Kupplungsrahmen und dem Anschlußrahmen erforderlich, die eine vergleichsweise umständliche Ausbildung voraussetzt. Die meisten landwirtschaftlichen Arbeitsmaschinen sind bereits herstellerseits mit Kuppeldreiecken ausgestattet. Bei Verwendung der oben beschriebenen bekannten Schnellkupplung müssen sämtliche Kuppeldreiecke ersetzt werden, was zumindest teilweise auch den Umbau des Teilantriebsstrangs auf der landwirtschaftlichen Arbeitsmaschine erfordert. Dies ist insbesondere bei solchen Arbeitsmaschinen der Fall, bei denen ein Riemenantrieb Verwendung findet und bei dem durch Verlagerung des Lagers der Abtriebswelle auf der Arbeitsmaschine die Riemenspannung nachgestellt wird. Die bekannte Schnellkupplung ist für solche Fälle nicht brauchbar, weil die Abtriebswelle keine Gelenkwelle ist, sondern eine normale, durchgehende Welle, so daß sich mit der Verlagerung des Lagers der Abtriebswelle auch das Lager des zweiten Verbindungselements relativ auf dem Anschlußrahmen verschiebt. Da das erste Verbindungselement auf dem Kupplungsrahmen in seiner Lage in der Kuppelebene jedoch festliegt, ist die Anwendung der bekannten Schnellkupplung dann nicht mehr möglich. Man ist in einem solchen Fall gezwungen, das Lager der Abtriebswelle an Ort und Stelle zu belassen und für das Nachspannen der Riemen gesonderte Spannrollen auf der landwirtschaftlichen Arbeitsmaschine zu installieren. Die Festlegung des Lagers des ersten Verbindungselements auf dem Kupplungsrahmen verhindert es, die bekannte Schnellkupplung bei solchen landwirtschaftlichen Arbeitsmaschinen anzuwenden, bei denen an der durch die Lage des ersten Verbindungselements vorgegebenen Stelle für das zweite Verbindungselement der erforderliche Platz für die Kupplungsmuffe nicht vorhanden ist.

Der Erfindung liegt die Aufgabe zugrunde, ausgehend von einer Schnellkupplung gemäß der DE-OS 41 32 889 ein Verfahren und eine Schnellkupplung der eingangs beschriebenen Art aufzuzeigen, die universeller anwendbar sind und somit die Verbindung auch mit solchen landwirtschaftlichen Arbeitsmaschinen gestatten, bei denen die arbeitsmaschinenseitigen Verbindungselemente an axial und/oder radial voneinander abweichenden Orten relativ zum Anschlußrahmen angeordnet sind.

Erfindungsgemäß wird dies bei dem Verfahren der eingangs beschriebenen Art dadurch erreicht, daß nach dem mechanischen Verbinden des Anschlußrahmens an dem Kupplungsrahmen die Lage des ersten Verbindungselementes des schlepperseitigen Teilantriebsstrangs entsprechend der jeweiligen Lage des zweiten Verbindungselementes des arbeitsmaschinenseitigen Teilantriebsstrangs eingestellt wird und erst anschließend die beiden Verbindungselemente unter Achszentrierung und Winkelverdrehung einander axial angenähert und damit gekuppelt werden.

Das neue Verfahren ist damit nicht mehr darauf gerichtet, nach dem mechanischen Verbinden des Anschlußrahmens an dem Kupplungsrahmen die beiden Gestelle unter Achszentrierung und gegebenenfalls Winkelverdrehung einander axial anzunähern und dabei die beiden Verbindungselemente unter Achszentrierung und Winkelverdrehung miteinander zu kuppeln, sondern es ist zunächst einmal erforderlich, die Lage des ersten Verbindungselementes des schlepperseitigen Teilantriebsstrangs einzustellen und festzustellen, und zwar entsprechend der jeweiligen Lage des zweiten Verbindungselements des arbeitsmaschinenseitigen Teilantriebsstrangs im Raum bzw. relativ zu der Kuppelebene des Kupplungsrahmens bzw. der Kuppelebene des Anschlußrahmens. Durch diese Einstellung wird die Anpassung an das jeweilige Arbeitsgerät erreicht. Es versteht sich, daß beim Kuppeln mit Arbeitsgeräten, bei denen das zweite arbeitsmaschinenseitige Verbindungselement sich in unterschiedlichen Relativlagen befindet, jeweils ein Einstellvorgang erforderlich ist, wenn die verschiedenen Arbeitsmaschinen zeitlich aufeinanderfolgend gekuppelt werden sollen. Wird eine landwirtschaftliche Arbeitsmaschine, hinsichtlich der die Einstellung des schlepperseitigen Verbindungselementes bereits durchgeführt ist, nach einer Endkupplung wieder gekuppelt, so entfällt der Einstellvorgang.

Das neue Verfahren kann auch in Verbindung mit bekannte Kuppeldreiecken, z. B. mit umgekehrt U-förmiger Querschnittsgestaltung des Kupplungsrahmens und des Anschlußrahmens, wie es im Stand der Technik bekannt ist, angewendet werden. Eine Nachrüstung an den vorhandenen Anschlußrahmen ist somit nicht erforderlich. Die insoweit vorhandenen arbeitsmaschinenseitigen Unterschiede werden schlepperseitig ausgeglichen.

Die Annäherung der Verbindungselemente kann mit mechanischen, pneumatischen, hydraulischen oder elektrischen Mitteln durchgeführt werden. Diese Mittel lassen sich entweder willkürlich manuell schalten bzw. steuern oder es kann auch eine Folgesteuerung vorgesehen sein, die auf die Vollendung des mechanischen Verbindungsvorgangs des Anschlußrahmens am Kupplungsrahmen anspricht. Das Annähern der Verbindungselemente kann ersatzweise oder im Notfall auch Von Hand erfolgen. Das Absetzen der landwirtschaftlichen Arbeitsmaschine von dem Schlepper nach durchgeführter Arbeit wird in umgekehrter Reihenfolge durchgeführt. Die beiden Verbindungselemente werden in Fahrtrichtung gesehen auseinandergefahren und erst anschließend wird die landwirtschaftliche Arbeitsmaschine abgesetzt, indem der Kupplungsrahmen und der Anschlußrahmen voneinander getrennt werden.

Die Schnellkupplung der eingangs beschriebenen Art kennzeichnet sich erfindungsgemäß dadurch, daß das am Kupplungsrahmen vorgesehene erste Verbindungselement vermittels eines Gestells relativ zu der von dem Kupplungsrahmen aufgespannten Kuppelebene in jeder erforderlichen Lage entsprechend der jeweiligen Lage des zweiten Verbindungselements des arbeitsmaschinenseitigen Teilantriebsstrangs ein- und feststellbar ist. Damit wird die neue Schnellkupplung universeller anwendbar. Sie kann an jeglicher Anschluß- und Arbeitsbedingungen der landwirtschaftlichen Arbeitsmaschine angepaßt werden, indem das erste im Bereich des Kupplungsrahmens vorgesehene Verbindungselement über das Gestell entsprechend ein- und feststellbar ist. Arbeitsmaschinenseitig entfällt eine Umrüstung. Die neue Schnellkupplung läßt sich insoweit auch an bereits vorhandenen Arbeitsmaschinen nutzen.

Das am Kupplungsrahmen bzw. am Gestell und damit etwa im Bereich des Kupplungsrahmens vorgesehene erste Verbindungselement kann hinter der von dem Anschlußrahmen aufgespannten Kuppelebene enden. Damit müssen die beiden Verbindungselemente nicht mehr relativ nahe in der von dem jeweiligen Rahmen aufgespannten Kuppelebene liegen, sondern es ist vorteilhaft möglich, das erste Verbindungselement mit relativ großem Abstand gegenüber der Kuppelebene des Kuppelrahmens nach hinten zu verlagern (bei Heckanbau). Bei Frontverwendung der Schnellkupplung gilt Entsprechendes. Auch das zweite Verbindungselement kann bei Heckverwendung der Schnellkupplung relativ weit hinter der von dem Anschlußrahmen aufgespannten Kuppelebene angeordnet sein. Dies hat den großen Vorteil, daß sich die Schräglage der Gelenkwelle des zum ersten Verbindungselement führenden Teilantriebsstrang beim Ausheben des Kuppelrahmens vermittels der Schlepperhydraulik nicht wesentlich ändert, so daß jedenfalls geringere Schräglagenänderungen überstrichen werden. Die Längsverschieblichkeit der beiden Teile der Gelenkwelle auf der Seite des Schleppers muß daher für diese Bewegung geringer sein als im Stand der Technik. Eine weitere, zusätzliche Überdeckung kann vorteilhaft für die Längsverschiebbarkeit des ersten Verbindungselements genutzt werden, indem der schlepperseitige Teilantriebsstrang zur Überbrückung der Längsverschiebbarkeit des ersten Verbindungselementes längenveränderlich ausgebildet ist. Diese Ausbildung des schlepperseitigen Teilantriebsstrangs in Verbindung mit einem schaltbaren Antrieb für die Längsverschiebung des ersten Verbindungselementes muß nur einmal, nämlich nur schlepperseitig, angeordnet werden. Auf der landwirtschaftlichen Arbeitsmaschine ist praktisch keine nennenswerte Änderung erforderlich. Freilich muß dort ein passender Anschlußrahmen vorgesehen sein und der ohnehin vorhandene Achsstummel des arbeitsmaschinenseitigen Teilantriebsstrangs muß lediglich noch mit dem zweiten Verbindungselement versehen werden. Auch normale Kuppeldreiecke sind verwendbar. Auch die umgekehrte Anordnung ist möglich: der abtriebsseitige Teilantriebsstrang auf der Arbeitsmaschine ist dann längenveränderlich ausgebildet. Der schaltbare Antrieb für das Verbindungselement ist auf der Arbeitsmaschine angeordnet und stützt sich am Anschlußrahmen ab.

Der große Vorteil der Schnellkupplung liegt darin, daß die Kupplungsstelle, also die Stelle, an der die beiden Verbindungselemente - relativ zur Kuppelebene gesehen - miteinander in Verbindung treten, nicht festgelegt ist. Es ist daher möglich, mit ein und demselben Kupplungsrahmen und dem zugehörigen Teilantriebsstrang auf der Seite des Schleppers die Lage des ersten Verbindungselements teilweise zu verstellen bzw. anzupassen, um den unterschiedlichen Anordnungslagen des zweiten arbeitsmaschinenseitigen Verbindungselements Rechnung zu tragen. Die Verbindungselemente können dann an einer Stelle plaziert werden, an der kein Platzhindernis vorliegt.

Das Gestell, mit welchem die jeweils erforderliche Lage einund feststellbar ist, ist nicht wegmäßig, sondern kraftmäßig begrenzt, d. h. das Gewicht des Teilantriebsstrangs wird über vorgespannte Federn gehalten. Dies gilt für Heckanbau. Für Frontanbau der Schnellkupplung ist dann natürlich das erste Verbindungselement mit Abstand vor der Kuppelebene des Kupplungsrahmens angeordnet. Vermittels des einstellbaren Gestells wird die örtliche Lage des ersten Verbindungselements relativ zur Kuppelebene einstellbar gemacht. Dies erbringt den großen Vorteil, daß die relative Lage des zweiten Verbindungselements nicht mehr an und derselben Stelle relativ zur Kuppelebene des Anschlußrahmens vorgesehen sein muß, sondern von Arbeitsmaschine zu Arbeitsmaschine verändert werden kann, so, wie es die baulichen Gegebenheiten an der Arbeitsmaschine erfordern. Damit wird insbesondere die Nachrüstung von Arbeitsmaschinen erleichtert bzw. ermöglicht. Das einstellbare Gestell besitzt eine hinreichende Nachgiebigkeit durch seine Elastizität. Diese reicht im allgemeinen aus, um die Achszentrierung der beiden Verbindungselemente zu ermöglichen und auch die Verbindungselemente dann zu kuppeln. Es ist aber auch möglich, das Gestell mit Federelementen auszustatten. Im allgemeinen ist dies jedoch nicht erforderlich. Wichtig ist, daß das Gestell einstellbar bzw. verstellbar sein muß. Beim erstmaligen Verbinden einer landwirtschaftlichen Arbeitsmaschine mit einem Schlepper wird das Gestell gelöst und es erfolgt eine Achszentrierung zwischen den beiden Verbindungselementen von Hand, wobei dann der Antrieb für die Längsverschiebbarkeit des ersten Verbindungselements ausgelöst werden kann. Wenn die beiden Verbindungselemente durch die feste Lage des zweiten Verbindungselements relativ zum Anschlußrahmen gekuppelt sind, wird das einstellbare Gestell festgestellt, so daß die relative Lage des ersten Verbindungselements zur Kuppelebene des Kupplungsrahmens damit festgelegt ist und insoweit dann jedes weitere Entkuppeln bzw. Kuppeln und mechanische Verbinden zwischen Schlepper und landwirtschaftlicher Arbeitsmaschine vom Fahrersitz aus durchgeführt werden kann bzw. gesteuert werden kann.

Das Gestell kann zwei teleskopisch ineinander verschiebbare Rohrabschnitte aufweisen, in denen eine Kolben/Zylinder-Einheit oder ein Schrittmotor mit Zahnstange als Antrieb für die Längsverschiebbarkeit des ersten Verbindungselementes vorgesehen ist. Die Elemente des Antriebs sind damit zugleich geschützt untergebracht und stehen für die Einsteuerung zur Verfügung. Selbstverständlich müssen sie in der erforderlichen Weise angeschlossen, mit einem Steuerventil versehen oder mit einem sonstigen Schalter ausgerüstet werden, der zweckmäßig vom Fahrersitz aus betätigbar ist.

Die beiden Verbindungselemente können als Muffe und Stecker ausgebildet sein und aufeinander abgestimmte, unrunde Profilierungen für die Drehmomentübertragung aufweisen. Die Überdeckungslänge zwischen Muffe und Stecker ist nicht mehr beschränkt. Freilich erfordert eine große Überdeckungslänge eine große Längsverschiebbarkeit der Verbindungselemente zueinander. Die Ausbildung der Verbindungselemente muß nicht unbedingt als Muffe und Stecker realisiert werden. Die Verbindungselemente können an sich auch als identisch ausgebildete Klauenkupplungsteile oder auch als Bestandteile einer Reibungskupplung ausgebildet sein, wenngleich die unrunden Profilierungen an Muffe und Stecker oder die entsprechende Flächengestaltung an Klauenkupplungen gegenüber einer Reibkupplung den Vorteil des mechanischen Formschlusses aufweisen. Die Ausbildung als Muffe und Stecker, also eine unterschiedliche Ausbildung der beiden Verbindungselemente, ist besonders vorteilhaft, weil hier auf vergleichsweise einfache Weise eine Axialzentrierung erreicht werden kann. Dabei ist es prinzipiell gleichgültig, ob die Muffe auf dem Schlepper und der Stecker auf der Arbeitsmaschine oder umgekehrt angeordnet sind.

Der Stecker und die Muffe können Zentrierflächen für eine Zentrierung ihrer Achsen zueinander aufweisen, die in dem einander zugekehrten Frontbereich der Verbindungselemente angeordnet sind. Damit wird sichergestellt, daß bei einer Annäherung der beiden Verbindungselemente aneinander und in einer ersten Stufe des gegenseitigen Kontakts eine Zentrierung der Achsen zueinander erfolgt, derart, daß sich Stecker und Muffe mit fluchtenden Achsen zueinander einstellen.

Der Stecker und die Muffe können frontseitige dachförmige Schneiden für die Winkelverdrehung und unrunde Winkelflächen aufweisen, wobei die Winkelflächen gegenüber den Zentrierflächen und den Schneiden auf den Verbindungselementen rückversetzt angeordnet sind. Beim Ineinandergreifen der dachförmigen Schneiden im Anschluß an die Achszentrierung wird die erforderliche Winkelverdrehung zwischen den Verbindungselementen herbeigeführt, falls sich die Verbindungselemente nicht zufällig in einer günstigen Relativwinkellage befinden. Mit dem Ende der Winkelverdrehung befinden sich dann die beiden Verbindungselemente in einer solchen relativen Lage, daß die unrunden Winkelflächen miteinander in Eingriff kommen können, indem das teleskopische Ineinanderschieben zwischen Stecker und Muffe fortgesetzt wird, bis letztlich der gesamte Hub der Längsverschiebbarkeit aufgebraucht ist. Durch die Verwendung der dachförmigen Schneiden ist sichergestellt, daß in allen Fällen eine Winkelverdrehung stattfindet und eine direkte Gegenüberstellung der Verbindungselemente, wie sie bei stumpf ausgebildeten Klauenkupplungen möglich ist, vermieden wird.

Der Stecker kann im wesentlichen aus einem die Zentrierflächen tragenden Konuskörper und einem die Schneiden und die Winkelflächen tragenden Vierkantkörper zusammengesetzt sein, wobei zumindest der Vierkantkörper mit einem hohlen Keilbuchsenprofil zum Aufstecken auf einen mit Keilwellenprofil versehenen Achsstummel versehen ist. Da der Stecker das kleinvolumigere Teil darstellt, empfiehlt es sich, auf jeder landwirtschaftlichen Arbeitsmaschine einen solchen Stecker als zweites Verbindungselement anzuordnen, während die insoweit großvolumiger ausgestattete Muffe nur einmal schlepperseitig vorgesehen sein muß.

Die Muffe kann einen Ringkörper mit einem Vierkanthohlprofil aufweisen, auf dessen dem Stecker zugekehrter Stirnfläche sowohl die Zentrierflächen als auch die Schneiden angeordnet sind.

Der anmeldungsgemäße Gegenstand wird anhand eines bevorzugten Ausführungsbeispiels weiter erläutert und beschrieben. Es zeigen:
- Figur 1: eine perspektivische Darstellung des Kupplungsrahmens und des Anschlußrahmens in einer Relativlage vor dem mechanischen Verbinden,
- Figur 2: eine Seitenansicht der als Muffe und Stecker ausgebildeten Verbindungselemente der Teilantriebsstränge vor dem Kuppeln des Antriebsstrangs,
- Figur 3: eine Stirnansicht des Steckers gemäß der Linie III-III in Figur 2,
- Figur 4: eine Stirnansicht der Muffe gemäß der Linie IV-IV in Figur 2,
- Figur 5: eine Seitenansicht auf die wesentlichen Teile des Steckers in einer um 45° um seine Achse gedrehten Stellung gegenüber Figur 2 und
- Figur 6: eine Seitenansicht der Verbindungselemente gemäß Figur 2 in gekuppeltem Zustand.

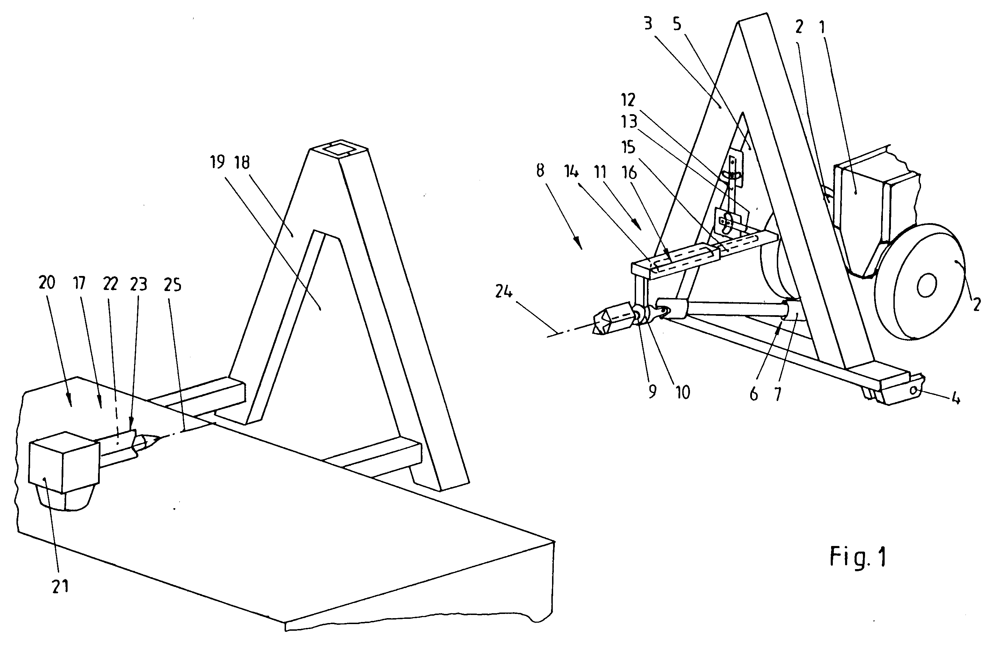

In Figur 1 sind die für die Erfindung wesentlichen Teile in perspektivischer Relativanordnung zueinander dargestellt. Von einem Schlepper 1 sind dessen Hinterräder 2 verdeutlicht. Die Schlepperhydraulik und die Unterlenker und der Oberlenker sind der Übersichtlichkeit halber weggelassen. Es ist ein dreieckförmiger Kupplungsrahmen 3 dargestellt, wobei das Dreieck in der bekannten Weise mit der Spitze nach oben weisend vorgesehen ist. Es handelt sich um ein gleichschenkliges Dreieck. Der Kupplungsrahmen 3 kann ein kastenförmig geschlossenes Hohlprofil besitzen. Es ist ein Lager 4 für den Angriff eines Unterlenkers angedeutet. Der Kupplungsrahmen 3 befindet sich damit (bei Heckanbau) hinter den Hinterrädern des Schleppers 1. Bei Frontanbau gilt Entsprechendes. Der Kupplungsrahmen 3 ist dauerhaft mit dem Schlepper 1 verbunden. Der Kupplungsrahmen 3 spannt mit seiner dreieckförmigen Gestaltung eine Kuppelebene 5 auf, die in der Mitte der profilmäßigen Gestaltung des Kupplungsrahmens 3 senkrecht zur Fahrt- bzw. Arbeitsrichtung liegen kann. Beim Anheben des Kupplungsrahmens 3 über die Schlepperhydraulik ändert die Kuppelebene 5 des Kupplungsrahmens 3 ihre Relativlage entsprechend der Geometrie der Unterlenker und des Oberlenkers.

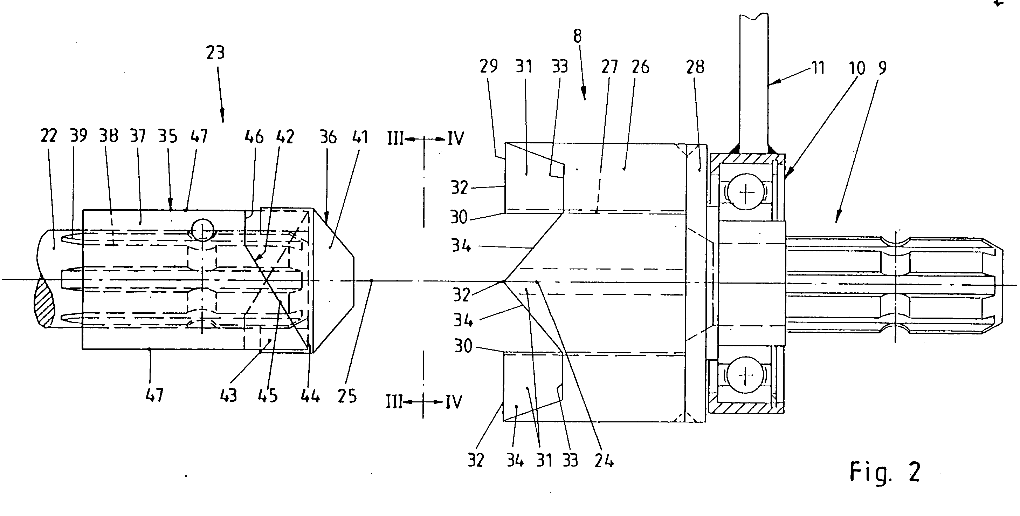

Vom Schlepper 1 führt ein Teilantriebsstrang 6 durch den Kupplungsrahmen 3 bzw. dessen Kuppelebene 5 hindurch nach hinten. Der Teilantriebsstrang 6 weist eine Gelenkwelle 7 auf, die zwei teleskopisch ineinander verschiebbare Teile besitzt. Die Gelenkwelle 7 endet in einem schlepperseitigen Verbindungselement 8, welches in Form einer Muffe ausgebildet sein kann, wie dies insbesondere Figur 2 zeigt. Es ist erkennbar, daß sich das Verbindungselement 8 relativ weit hinter der Kuppelebene 5 des Kupplungsrahmens 3 befindet. Das Verbindungselement 8 sitzt drehfest auf einem Achsstummel 9 oder ist mit einem solchen Achsstummel 9 ausgestattet, der in einem Lager 10 aufgenommen wird. Das Lager 10 ist Bestandteil eines ver- und einstellbaren Gestells 11, welches mehrere Arme und Teile aufweisen kann, um jede gewünschte Lage des Verbindungselements 8 relativ zur Kuppelebene 5 einstellen zu können. Das Gestell 11 ist begrenzt nachgiebig ausgebildet. Es stützt sich letztlich am Kupplungsrahmen 3 ab. Das Gestell 11 kann zwei Schwenkarme 12 und 13 aufweisen, damit über Gelenke und bogenförmig langlochartige Durchbrechungen in Verbindung mit Feststellschrauben die Einstellung erfolgen kann. Auch Bohrungen sind denkbar, um die Schwenkarme 12, 13 für eine andere Arbeitsmaschine schnell in die neue Position überführen zu können. Das Gestell 11 weist zweckmäßig zwei teleskopisch ineinander verschiebbare Rohrabschnitte 14 und 15 auf. Im Innenraum dieser Rohrabschnitte 14 und 15 ist ein Antrieb 16, beispielsweise in Form eines nur gestrichelt angedeuteten Pneumatikzylinders, untergebracht, so daß durch eine Betätigung des Pneumatikzylinders bzw. des Antriebs 16 über einen nicht dargestellten Schaltkreis über ein Schaltorgan, welches vom Schlepper 1 her bedienbar ist, das Lager 10 und damit letztendlich das Verbindungselement 8 längsverfahrbar ist, also in einer Richtung, die etwa senkrecht auf der Kuppelebene 5 des Kupplungsrahmens 3 steht und die in etwa mit der Fahr- und Arbeitsrichtung übereinstimmt. Die beiden Teile der Gelenkwelle 7 besitzen eine solche Überdeckung, daß in ihr der durch die Längsverschiebung des Verbindungselements 8 überstrichene Weg sicher aufgenommen wird und trotzdem in all diesen Stellungen Drehmoment übertragen werden kann.

Hinter dem Schlepper 1 mit seinem Kupplungsrahmen 3 ist eine landwirtschaftliche Arbeitsmaschine 17, beispielsweise ein Mähgerät, angedeutet. Die Arbeitsmaschine 17 ist fest mit einem Anschlußrahmen 18 ausgestattet, der in seiner Form auf die Dreiecksform des Kupplungsrahmens 3 abgestimmt ist. Der Anschlußrahmen 18 kann eine umgekehrt U-förmige Profilgestaltung aufweisen, und zwar derart, daß er auf dem Kupplungsrahmen 3 aufgenommen werden kann, so daß sich seine Kuppelebene 19 dann mit der Kuppelebene 5 deckt. Die Querschnittsgestaltung und Ausbildung des Kupplungsrahmens 3 und des Anschlußrahmens 18 kann an sich in beliebiger, im Stand der Technik bekannter Weise erfolgen. Auch eine Ausbildung ist möglich, wie es in der deutschen Patentanmeldung P 41 16 200 dargestellt und beschrieben ist. Auf der landwirtschaftlichen Arbeitsmaschine 17 ist ein Teilantriebsstrang 20 verwirklicht, der ein Eckgetriebe 21 aufweisen kann, von dem in nicht dargestellter Weise eine etwa vertikal angeordnete Welle beispielsweise zu den Mähtellern der Arbeitsmaschine 17 niederführt. Andererseits ragt aus dem Eckgetriebe 21 nach vorn ein Achsstummel 22, auf den ein zweites Verbindungselement 23, z. B. in Form eines Steckers, wie er in Figur 2 dargestellt ist, aufgesetzt ist. Es versteht sich, daß die beiden Verbindungselemente 8 und 23 aufeinander abgestimmt und aneinander angepaßt sind, und zwar derart, daß sie hier bei Ausbildung als Stecker und Muffe ineinandergeschoben werden können, so daß dies zum Kuppeln der beiden Teilantriebsstränge 6 und 20 führt. Die relative Lage des zweiten Verbindungselements 23 zur Kuppelebene 19 des Anschlußrahmens 18 liegt je nach der Art der landwirtschaftlichen Arbeitsmaschine 17 meist fest bzw. ist konstruktiv vorgegeben. Wenn der Teilantriebsstrang 20 über einen Riemen verfügt, kann sich die relative Lage des Verbindungselements 23 in einer parallelen Ebene zu der Kuppelebene 19 verändern. Auch ist es möglich, daß bei verschiedenen landwirtschaftlichen Arbeitsmaschinen 17 die relative Lage jedes dort verwirklichten Verbindungselements 23 durchaus unterschiedlich ist, also eine unterschiedliche Relativlage zum Anschlußrahmen 18 bzw. zur Kuppelebene 19 einnimmt. Um all diesen Bedingungen gerecht zu werden, ist das Gestell 11 verstell- und einstellbar und damit anpaßbar.

Bei einem ersten Einstellen und Verbinden eines mit dem Kupplungsrahmen 3 ausgestatteten Schleppers mit einer landwirtschaftlichen Arbeitsmaschine 17 wird der Antrieb 16 zunächst eingefahren, so daß sich die beiden Teile der Gelenkwelle 7 ineinanderschieben und sich somit das Verbindungselement 8 relativ weit auf die Kuppelebene 5 zu bewegt. Dies geschieht jedenfalls in einem solchen Maß, daß anschließend der Kupplungsrahmen 3 unter den Anschlußrahmen 18 durch Verfahren des Schleppers und Betätigen der Schlepperhydraulik gebracht werden kann, ohne daß dabei die Gefahr besteht, daß das Verbindungselement 8 an dem Verbindungselement 23 anschlägt oder in dessen Bereich kommt. Es wird zunächst die mechanische Verbindung durch Aufsatteln des Anschlußrahmens 18 auf dem Kupplungsrahmen 3 durchgeführt. Durch die umgekehrt U-förmige Profilgestaltung des Anschlußrahmens 18 ist die Anordnung einer gesonderten Verriegelungseinrichtung gegen Abrutschen hinten zwischen Kupplungsrahmen 3 und Anschlußrahmen 18 entbehrlich. Wenn die beiden Rahmen 3 und 18 jedoch so gestaltet werden, wie dies bei der gattungsgemäßen Schnellkupplung der Fall ist, ist es unerläßlich, eine entsprechende Verriegelungseinrichtung vorzusehen. In allen Fällen muß das Heraustreten des Kupplungsrahmens 3 aus dem Anschlußrahmen 18 nach unten verhindert werden.

Nachdem die mechanische Verbindung der beiden Rahmen 5 und 18 erfolgt ist, wird die Feststelleinrichtung an den Schwenkarmen 12 und 13 gelöst und der Antrieb 16 eingeschaltet, so daß sich das Verbindungselement 8 gegenüber dem stillstehenden Verbindungselement 23 nach hinten bewegt und das Verbindungselement 8 auf das Verbindungselement 23 zugeführt wird. Dabei werden das Gestell 11 und insbesondere die Schwenkarme 12 und 13 so verschwenkt, daß die Achse 24 des Verbindungselements 8 mit der Achse 25 des Verbindungselements 23 fluchtet, so daß bei fortgesetzter Bewegung durch den Antrieb 16 das muffenförmige Verbindungselement 8 über das steckerförmige Verbindungselement 23 hinübertritt und damit die beiden Teilantriebsstränge 6 und 20 gekoppelt sind. Wenn die Kopplung erfolgt ist, werden die Feststelleinrichtungen an den Schwenkarmen 12 und 13 betätigt, so daß die Achse 24 in etwa auf die Achse 25 ausgerichtet fixiert ist. Damit ist die Relativlage des Verbindungselements 8 zu der Kuppelebene 5 des Kupplungsrahmens 3 für die betreffende landwirtschaftliche Arbeitsmaschine 17 festgelegt. Mit der landwirtschaftlichen Arbeitsmaschine 17 kann nun gearbeitet werden. Ist ein Teil der Arbeit erledigt und eine Unterbrechung beabsichtigt, so kann das Entkuppeln erfolgen. Dies wird in der Weise durchgeführt, daß zunächst der Antrieb 16 eingefahren wird, so daß sich das muffenförmige Verbindungselement 8 nach vorn bewegt und von dem steckerförmigen Verbindungselement 23 freikommt. Die Teilantriebsstränge 6 und 20 sind damit entkuppelt. Anschließend wird die mechanische Verbindung aufgehoben, indem vermittels der Schlepperhydraulik die landwirtschaftliche Arbeitsmaschine 17 abgesetzt wird. In der fortgesetzten Absetzbewegung kommt der Anschlußrahmen 18 von dem Kupplungsrahmen 3 frei und es ist möglich, bei abgesetzter landwirtschaftlicher Arbeitsmaschine 17 mit dem Schlepper 1 und dem Kupplungsrahmen 3 hinwegzufahren.

Soll dann die Arbeit fortgesetzt werden, so ist es hierbei, wie auch bei jedem weiteren Kuppeln, lediglich erforderlich, mit dem Schlepper 1 rückwärts auf die landwirtschaftliche Arbeitsmaschine 17 zuzufahren, um zunächst die mechanische Verbindung zwischen Kupplungsrahmen 3 und Anschlußrahmen 18 herbeizuführen. Das Gestell 11 befindet sich in seiner vorher eingestellten Relativlage, so daß die Achse 24 des Verbindungselements 8 in etwa mit der Achse 25 des Verbindungselements 23 fluchtet. Es ist jetzt nur noch erforderlich, beispielsweise vom Fahrersitz aus den Antrieb 16 einzuschalten, so daß das Verbindungselement 8 nach rückwärts auf das Verbindungselement 23 zubewegt wird. Die begrenzte Nachgiebigkeit des Gestells 11 erlaubt damit zunächst ein genaues Ausrichten der Achsen 24 und 25 zueinander und anschließend das Kuppeln der beiden Verbindungselemente 8 und 23, so daß die Teilantriebsstränge 6 und 20 damit gekuppelt sind und die Arbeit mit der landwirtschaftlichen Arbeitsmaschine 17 fortgesetzt werden kann. Gleiches gilt für jeden weiteren Kupplungsvorgang. Das Ausrichten und Führen des Verbindungselements 8 von Hand ist nur bei dem allerersten Kupplungsvorgang erforderlich, und zwar auch nur dann, wenn sich das Verbindungselement 23 bei dieser landwirtschaftlichen Arbeitsmaschine 17 an einer anderen Stelle befindet. Man erkennt, daß es vorteilhaft möglich ist, verschiedene unterschiedliche landwirtschaftlichen Arbeitsmaschinen 17 mit Anschlußrahmen 18 zu versehen, bei denen die Achse 25 des jeweiligen Verbindungselements 23 relativ zur Kuppelebene 19 an der gleichen Stelle vorgesehen ist. Für solche Fälle entfällt selbst beim An- und Abkuppeln unterschiedlicher landwirtschaftlicher Arbeitsmaschinen 17 eine Betätigung und Veränderung des Gestells 11 von Hand. Eine solche manuelle Erstanpassung ist nur dann erforderlich, wenn beim Wechsel von landwirtschaftlichen Arbeitsmaschinen 17 deren unterschiedliche Verbindungselemente 23 sich an unterschiedlichen Koordinaten zu der Kuppelebene 19 befinden, was manchmal aus Platzgründen oder aus Gründen der Anordnung der Fall sein kann.

Für die Ausbildung der Verbindungselemente 8 und 23 gibt es zahlreiche Möglichkeiten. Eine der einfachsten Möglichkeiten ist die Ausbildung als Rutschkupplung, wobei kegelförmige Teile ineinandergreifen können. Auch eine Ausbildung als Klauenkupplung ist möglich, wenn diese beispielsweise mit abgeschrägten Zähnen an den beiden Verbindungselementen 8 und 23 versehen werden. Im Folgenden sei anhand der Figuren 2 bis 6 eine muffen- und steckerartige Ausbildung der Verbindungselemente 8 und 23 dargestellt, die insoweit mit besonderen Vorteilen versehen ist, als nicht nur ein Reibschluß, sondern ein ordnungsgemäßer Formschluß zwischen den Verbindungselementen 8 und 23 mit relativ großer Überdeckungslänge erzielbar ist, und zwar lediglich durch Fernsteuerung des Antriebs 16, ggf. nach einer ersten manuellen Einstellung, wie sie oben beschrieben wurde.

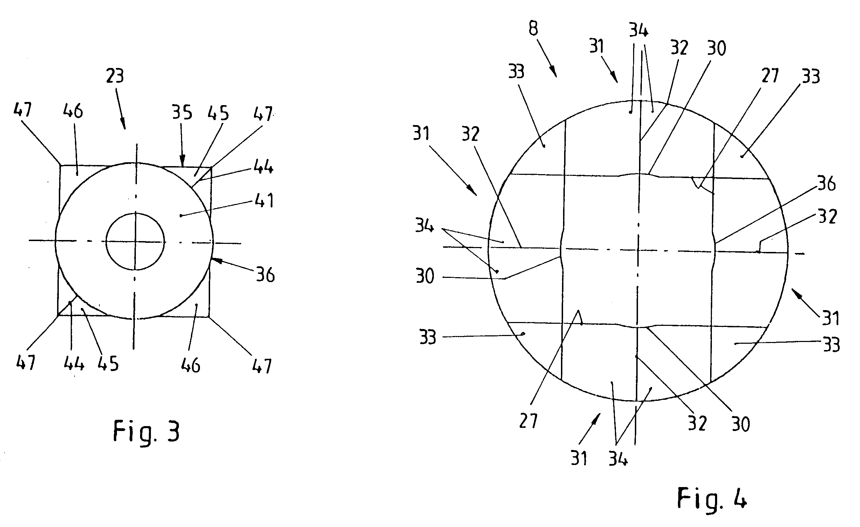

In Figur 2 ist ein Teil des Gestells 11 dargestellt, an dessen nach unten gekehrtem Ende das Lager 10 in Form eines Kugellagers vorgesehen ist. Hier ist das Verbindungselement 8 mit seinem Achsstummel 9 gelagert. Der Achsstummel 9 ist mit einem Keilrippenprofil ausgestattet, um die eine Hälfte eines Kardangelenks aufzunehmen, dessen andere Hälfte mit dem einen Teil der Gelenkwelle 7 bzw. dem Teilantriebsstrang 6 verbunden ist. Auf der dem Schlepper abgekehrten Seite weist das Verbindungselement 8 eine Muffe 26 auf, die als Ringkörper ausgebildet ist und die ein Vierkanthohlprofil 27 besitzt. Der ringförmige Körper der Muffe 26 geht an seinem dem Lager 10 zugekehrten Ende in eine Trägerplatte 28 über, an der der Achsstummel 9 ansetzt. An der dem Schlepper 1 abgekehrten Seite besitzt die Muffe 26 eine Stirnfläche 29 mit einer relativ komplizierten Formgebung. Eine Draufsicht auf diese Stirnfläche 29 zeigt Figur 4. Innerhalb der Stirnfläche 29 sind Zentrierflächen 30 gebildet, die kreisbogenförmig begrenzt sind (Figur 4) und die zwischen Vorsprüngen 31 und dem Vierkanthohlprofil 27 gebildet werden. Die Vorsprünge 31 enden in dachförmigen Schneiden 32, d. h. die Schneiden 32 sind die Punkte der Vorsprünge 31, die sich am weitesten vom Schlepper 1 aus gesehen nach hinten erstrecken. Zwischen den dachförmig ausgebildeten Vorsprüngen 31 befinden sich zurückversetzte Flächenbereiche 33, die keine Funktion haben. Das Vierkanthohlprofil 27 besitzt im Anschluß an die Schneiden 32 Winkelflächen 34 für die relative Winkelverdrehung, wie sie zum Einführen des Steckers in die Muffe erforderlich ist.

Das Verbindungselement 23 auf der landwirtschaftlichen Arbeitsmaschine 17 besteht im wesentlichen aus einem Stecker 35, der auf den Achsstummel 22 aufgesetzt ist. Der Stecker selbst weist im wesentlichen einen Konuskörper 36 und einen Vierkantkörper 37, wobei der Vierkantkörper mit einem hohlen Keilbuchsenprofil 38 ausgestattet ist, welches passend zu einem Keilwellenprofil 39 ausgebildet ist, mit welchem der Achsstummel 22 ausgestattet ist. Ein Querstift 40 dient der axialen Lagesicherung zwischen dem Vierkantkörper 37 und dem Achsstummel 22.

Der Konuskörper 36 des Steckers 35 weist an seinem in Richtung auf die Muffe 26 vorstehenden Teil Zentrierflächen 41 auf, die in Ausbildung und Anordnung auf die Zentrierflächen 30 der Muffe 26 abgestimmt sind. Die Zentrierflächen 30 und 41 sind so ausgebildet und angeordnet, daß bei einer axialen Annäherung zwischen den beiden Verbindungselementen 8 und 23 zunächst die Zentrierflächen 30 und 41 in Anlage zueinander kommen, so daß eine Zentrierung der Achsen 24 und 25 zueinander eintritt.

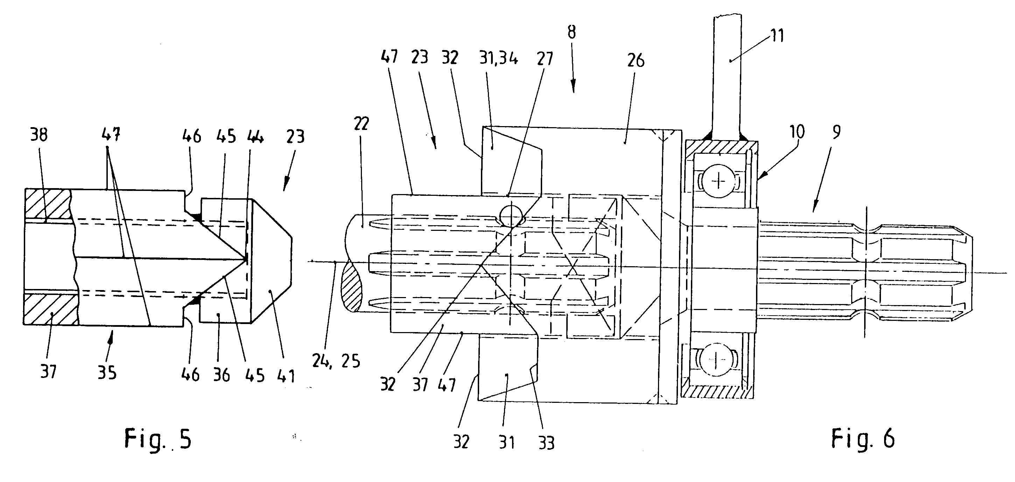

Der Vierkantkörper 37 besitzt auf seiner dem Konuskörper 36 zugekehrten Stirnfläche 42 zwei Vorsprünge 43, die diagonal gegenüberliegend angeordnet sind (Figur 3) und in ihrem am weitesten vorstehenden Teil eine Schneide 44 und im Anschluß daran dachförmige Winkelflächen 45 bilden. Auch hier sind zurückversetzte Flächenbereiche 46 vorgesehen, die keine Funktion haben. Aus der Zusammenschau der Figuren 1, 3 und 5 wird die besondere Ausbildung des Steckers 35 bzw. des Verbindungselements 23 erkennbar. Auf diese Zeichnungen wird gesondert hingewiesen. Aus Figur 5 wird erkennbar, wie der Konuskörper 36 in den Vierkantkörper 37 eingesetzt und dort festgeschweißt ist. Dabei befinden sich die Schneiden 44 und die Winkelflächen 45 rückversetzt gegenüber der Zentrierfläche 41. Figur 5 zeigt auch die Kanten 47 des im Querschnitt vierkantig ausgebildeten Vierkantkörpers 37, in Abstimmung auf das Vierkanthohlprofil 27 des Verbindungselements 8. Da bei der Darstellung in Figur 5 das Verbindungselement 23 um seine Achse 25 um 45° gedreht ist, sieht man in Figur 5 drei Kanten 47, während in Figur 2 sich jeweils zwei Kanten 47 decken.

Aus der Zusammenschau der Figuren wird nun verständlich, daß bei fortgesetzter Annäherungsbewegung und nachdem mit Hilfe der Zentrierflächen 30 und 41 die Achszentrierung der Achsen 24 und 25 stattgefunden hat, die Schneiden 32 der Muffe 26 zu den Schneiden 44 des Steckers 35 in eine willkürliche Relativlage gelangen, bei der die große Wahrscheinlichkeit besteht, daß sich die Schneiden 44 und die Schneiden 32 nicht direkt einander gegenüberliegen, sondern in einem Winkel zueinander stehen. Die Schneiden 44, 32 bzw. die sich jeweils anschließenden Winkelflächen 45 und 34 werden bei fortgesetzter Annäherungsbewegung aneinander gleiten, wobei die Verbindungselemente 8 und 23 um ihre zentrierten Achsen 24 und 25 eine gegenseitige Winkelverdrehung ausführen werden, die derart gerichtet und ein derartiges Ausmaß annimmt, daß die Kanten 47 relativ zu dem Vierkanthohlprofil 27 so verdreht werden, daß die beiden Vierkantprofile ineinander geführt werden. Diese Relativverdrehung ist möglich, da in den Teilantriebssträngen ohnehin entsprechendes Spiel vorhanden ist, der schlepperseitige Teilantriebsstrang vor seiner kraftschlüssigen Kupplung frei drehbar ist und die maximal erforderliche Verdrehung zwischen Stecker und Muffe im ungünstigsten Fall fast 90° betragen kann. Das Verbindungselement 23 tritt mit seinen vier Kanten 47 in das Vierkanthohlprofil 27 der Muffe 26 ein, wobei bei fortgesetzter Annäherung zwischen den Verbindungselementen 8 und 23 eine hinreichend große Überdeckung der Verbindungselemente 8 und 23 erzielt wird, wie dies aus Figur 6 ersichtlich ist. Es versteht sich, daß der Antrieb 16 für diese Längsverschiebung des Verbindungselements 8 entsprechend ausgebildet sein muß.

| ***Bezugszeichenliste:*** | | | |
|---|---|---|---|
| 1 | Schlepper | 33 | Flächenbereich |
| 2 | Hinterrad | 34 | Winkelflächen |
| 3 | Kupplungsrahmen | 35 | Stecker |
| 4 | Lager | 36 | Konuskörper |
| 5 | Kuppelebene | 37 | Vierkantkörper |
| 6 | Teilantriebsstrang | 38 | Keilbuchsenprofil |
| 7 | Gelenkwelle | 39 | Keilwellenprofil |
| 8 | Verbindungselement | 40 | Querstift |
| 9 | Achsstummel | 41 | Zentrierflächen |
| 10 | Lager | 42 | Stirnfläche |
| 11 | Gestell | 43 | Vorsprung |
| 12 | Schwenkarm | 44 | Schneide |
| 13 | Schwenkarm | 45 | Winkelflächen |
| 14 | Rohrabschnitt | 46 | Flächenbereich |
| 15 | Rohrabschnitt | 47 | Kanten |
| 16 | Antrieb | | |
| 17 | Arbeitsmaschine | | |
| 18 | Anschlußrahmen | | |
| 19 | Kuppelebene | | |
| 20 | Teilantriebsstrang | | |
| 21 | Eckgetriebe | | |
| 22 | Achsstummel | | |
| 23 | Verbindungselement | | |
| 24 | Achse | | |
| 25 | Achse | | |
| 26 | Muffe | | |
| 27 | Vierkanthohlprofil | | |
| 28 | Trägerplatte | | |
| 29 | Stirnfläche | | |
| 30 | Zentrierflächen | | |
| 31 | Vorsprünge | | |
| 32 | Schneide | | |

## Patentansprüche

1. Verfahren zum mechanischen Verbinden eines Schleppers mit einer landwirtschaftlichen Arbeitsmaschine und zum Kuppeln eines vom Schlepper zur Arbeitsmaschine führenden Antriebsstrangs, mit einem mit den Lenkern einer Schlepperhydraulik verbundenen Kupplungsrahmen, einem mit der Arbeitsmaschine verbundenen Anschlußrahmen und einer Verriegelungseinrichtung für den Anschlußrahmen am Kupplungsrahmen, sowie mit einem in einem ersten Verbindungselement endenden schlepperseitigen Teilantriebsstrang und einem in einem zweiten Verbindungselement endenden arbeitsmaschinenseitigen Teilantriebsstrang, wobei zunächst allein das mechanische Verbinden des Anschlußrahmens an dem Kupplungsrahmen erfolgt und anschließend die beiden Verbindungselemente etwa senkrecht zu der von dem Kupplungsrahmen aufgespannten Kuppelebene zueinander angenähert werden und dabei eine Zentrierung der Achsen der beiden Verbindungselemente und sodann eine relative Winkelverdrehung der beiden Verbindungselemente durchgeführt werden, dadurch gekennzeichnet, daß nach dem mechanischen Verbinden des Anschlußrahmens an dem Kupplungsrahmen die Lage des ersten Verbindungselementes des schlepperseitigen Teilantriebsstrangs entsprechend der jeweiligen Lage des zweiten Verbindungselementes des arbeitsmaschinenseitigen Teilantriebsstrangs eingestellt wird und erst anschließend die beiden Verbindungselemente unter Achszentrierung und Winkelverdrehung einander axial angenähert und damit gekuppelt werden.

2. Verfahren nach Anspruch 1, dadurch gekennzeichnet, daß die Annäherung der Verbindungselemente mit mechanischen, pneumatischen, hydraulischen oder elektrischen Mitteln durchgeführt wird.

3. Schnellkupplung zum mechanischen Verbinden eines Schleppers (1) mit einer landwirtschaftlichen Arbeitsmaschine (17) und zum Kuppeln eines vom Schlepper (1) zur Arbeitsmaschine (17) führenden Antriebsstrangs, mit einem mit den Lenkern einer Schlepperhydraulik verbindbaren Kupplungsrahmen (3), einem mit der Arbeitsmaschine (17) verbindbaren Anschlußrahmen (18) und einer Verriegelungseinrichtung für den Anschlußrahmen (18) am Kupplungsrahmen (3), sowie mit einem in einem ersten Verbindungselement (8) endenden schlepperseitigen Teilantriebsstrang (6) und einem in einem zweiten Verbindungselement (23) endenden arbeitsmaschinenseitigen Teilantriebsstrang (20), wobei das erste Verbindungselement (8) gegenüber dem Kupplungsrahmen (3) etwa senkrecht zu der von dem Kupplungsrahmen (3) aufgespannten Kuppelebene (5) und damit in Richtung seiner Achse (24) längsverschieblich gelagert ist und das erste Verbindungselement (8) die von den Kupplungsrahmen (3) aufgespannte Kuppelebene (5) in Richtung auf die Arbeitsmaschine durchsetzt und begrenzt nachgiebig an dem Kupplungsrahmen (3) gelagert ist, dadurch gekennzeichnet, daß das am Kupplungsrahmen (3) vorgesehene erste Verbindungselement (8) vermittels eines Gestells (11) relativ zu der von dem Kupplungsrahmen (3) aufgespannten Kuppelebene (5) in jeder erforderlichen Lage entsprechend der jeweiligen Lage des zweiten Verbindungselements des arbeitsmaschinenseitigen Teilantriebsstrangs ein- und feststellbar ist.

4. Schnellkupplung nach Anspruch 3, dadurch gekennzeichnet, daß das am Kupplungsrahmen (3) vorgesehene erste Verbindungselement (8) hinter der von dem Anschlußrahmen (18) aufgespannten Kuppelebene (19) endet.

5. Schnellkupplung nach Anspruch 3 oder 4, dadurch gekennzeichnet, daß der schlepperseitige Teilantriebsstrang (6) zur Überbrückung der Längsverschiebbarkeit des ersten Verbindungselementes (8) längenveränderlich ausgebildet ist.

6. Schnellkupplung nach einem der Ansprüche 3 bis 5, dadurch gekennzeichnet, daß das Gestell (11) zwei teleskopisch ineinander verschiebbare Rohrabschnitte (14, 15) aufweist, in denen eine Kolben/Zylinder-Einheit oder ein Schrittmotor mit Zahnstange als Antrieb (16) für die Längsverschieblichkeit des ersten Verbindungselements (8) vorgesehen ist.

7. Schnellkupplung nach einem der Ansprüche 3 bis 6, dadurch gekennzeichnet, daß die beiden Verbindungselemente (8, 23) als Muffe (26) und Stecker (35) ausgebildet sind und aufeinander abgestimmte unrunde Profilierungen (27, 47) für die Drehmomentübertragung aufweisen.

8. Schnellkupplung nach den Ansprüchen 3 und 7, dadurch gekennzeichnet, daß der Stecker (35) und die Muffe (26) Zentrierflächen (41, 30) für eine Zentrierung ihrer Achsen (25, 24) zueinander aufweisen, die in den einander zugekehrten Frontbereichen der Verbindungselemente (8, 23) angeordnet sind.

9. Schnellkupplung nach einem der Ansprüche 7 und 8, dadurch gekennzeichnet, daß der Stecker (35) und die Muffe (26) frontseitig dachförmige Schneiden (44, 32) für die Winkelverdrehung und unrunde Winkelflächen (34, 45) aufweisen, wobei die Winkelflächen (34, 45) gegenüber den Zentrierflächen (41, 30) und den Schneiden (44, 32) auf den Verbindungselementen (8, 23) rückversetzt angeordnet sind.

10. Schnellkupplung nach einem der Ansprüche 7 bis 9, dadurch gekennzeichnet, daß der Stecker (35) im wesentlichen aus einem die Zentrierflächen (41) tragenden Konuskörper (36) und einem die Schneiden (44) und die Winkelflächen (45) tragenden Vierkantkörper (37) zusammengesetzt ist, wobei zumindest der Vierkantkörper (37) mit einem hohlen Keilbuchsenprofil (38) zum Aufstecken auf einen mit Keilwellenprofil (39) versehenen Achsstummel (22) versehen ist.

11. Schnellkupplung nach einem der Ansprüche 7 bis 10, dadurch gekennzeichnet, daß die Muffe (26) einen Ringkörper mit einem Vierkanthohlprofil (27) aufweist, auf dessen dem Stecker (35) zugekehrter Stirnfläche (29) sowohl die Zentrierflächen (30) als auch die Schneiden (32) angeordnet sind.
